# EUROPEAN PATENT SPECIFICATION

(11) **EP 0 817 948 B1**
(45) Date of publication and mention of the grant of the patent: **13.06.2001**
(21) Application number: 97902819.8
(22) Date of filing: 10.02.1997
(51) Int. Cl.: F28F 3/10, F16J 15/12

(54) **AN ENDLESS PLATE HEAT EXCHANGER RUBBER-GASKET**
ENDLOSE DICHTUNG AUS GUMMI FÜR PLATTENWÄRMETAUSCHER
JOINTS DE CAOUTCHOUC SANS FIN POUR ECHANGEURS DE CHALEUR A PLAQUES

(30) Priority: 09.02.1996 SE 9600479
(43) Date of publication of application: 14.01.1998
(73) Proprietor: Swep International AB, 183 03 Täby (SE)
(72) Inventor: LINDAHL, Lars, S-136 45 Handen (SE)
(74) Representative: Petré, Urban
(86) International application number: SE9700195
(87) International publication number: WO9729336

(56) References cited:
- EP-A- 0 396 277
- DE-A- 1 750 182
- GB-A- 2 092 241
- SE-B- 424 906
- SE-B- 468 916

## Description

The present invention relates to an endless plate heat exchanger rubber gasket, especially to be inserted between the plates around its ports.

In plate heat exchangers the packings and the packing material are considered to be the plate heat exchangers more critical components.

The chemical composition of the rubber used as packing makes the rubber to age in different ways depending on the temperature and the media the heat exchanger has to operate in. Oil for instance makes the rubber to swell, the sealing force then increasing with resulting cracks, if not the right material is used. When for instance ammonium hydrate is used in the plate heat exchanger a certain mass transport of it is achieved through the packing material itself. Different types of packing materials have to be used for ammonium hydrate in combination with oil and for ammonium hydrate without any oil. The choice of packing is always a compromise.

In trying to eliminate these drawbacks and to increase the lifetimer of the packing the invention has been proposed in accordance with the claims characterizing parts.

The invention will be described in detail with examples with reference to the drawing, where **Figure 1** schematically shows a comer of the heat exchanger with packings, **Figure 2** shows two assembled heat exchanger plates, **Figures 3** and **4** show various embodiments of the invention and **Figure 5** shows a further detail of an embodiment of the invention.

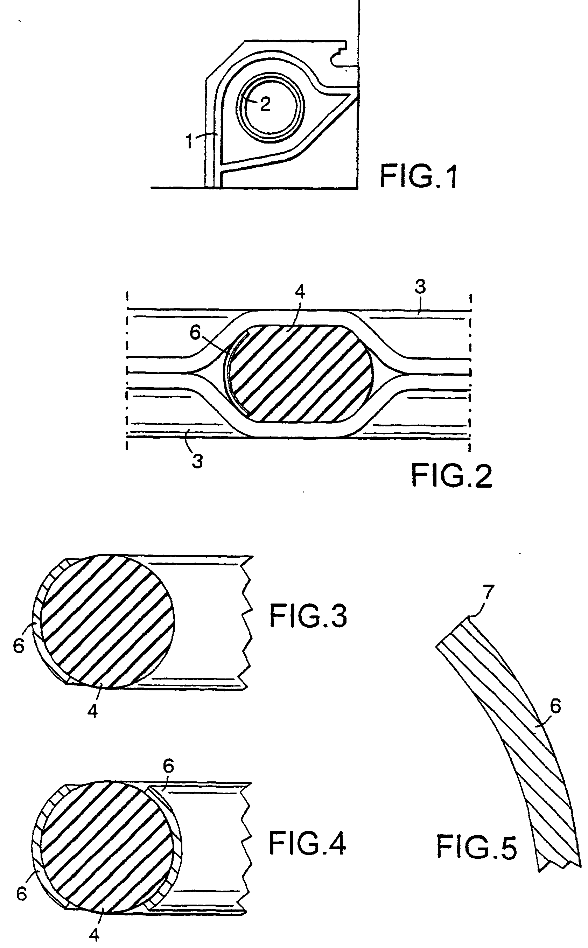

The plate heat exchanger consists in the usual way of a number of plate elements, the short side of such an element being shown in Figure 1 with the packing 1 sealing peripherically, the medium said to be harmless.

Around two port holes on the plate the endless packings 2 are installed sealing the medium with a tendency for diffusion. Hitherto this is known plate heat exchanger technology and will therefore not been discussed in detail.

Figure 2 shows a partial section of two assembled plates 3 in their packing groove portion and the there provided packing 4. In the shown example the packing consists of an O-ring packing situated around two of the plate element ports. It is assumed that one of the heat exchanger media, e.g. ammonium hydrate, is situated on the drawing to the right of the packing, i.e. the pressure on the packing acts from this side.

Figure 3 shows a packing according to the invention. The packing of the example is an O-ring packing, where on its outside, i.e. the side of the packing situated transvere to the packing plane, a sleeve is fastened in form of a metal ring of an alloy conveniently selected depending of the for the heat exchanger proper substance diffusing through the packing.

The sleeve circumscriber the packing cross section to such an extent that the sleeve, when pressing the packing during assembly between the heat exchanger plates, will come into contact with the packing groove plate material. This is illustrated in Figure 2 with the packing 4 by means of compression pressing the sleeve 6 against the packing groove edges and the sleeve thus sealing against these, and any diffusion through it will thus be stopped at the sleeve 6 and therefore not be leaking any further.

Figure 4 shows an O-ring packing provided with a sleeve 6 both on the outside and on the inside. Here it is only the packing pressing the inside sleeve 6 against the packing groove material. However, in the case of the outside sleeve 6, the sealing force is effected also by the hydrostatic pressure between the heat exchanger plates.

Figure 5 shows a partial section of a sleeve 6 provided with a sealing lip 7 along each outside edge, of which only one is illustrated. During assembly according to Figure 2 this sealing lip in cooperation with the packing groove material will contribute to an effective sealing effect.

The sleeve can be fixed to the packing in different ways, e.g. by means of glueing or vulcanizing or simply hooking to the packing, if this is an O-ring packing. Moreover it is understood that the invention might be adapted to other types of packings and that the invention is not limited to an O-ring packing or any packing profile.

## Claims

1. An endless rubber packing for plate heat exchangers to be inserted between the plates around its ports, **characterized** in that a sleeve (6) of a for the heat exchanger media unpenetrable metal material is provided at least along one side of the packing (4) transverse to the packing plane, said sleeve having in cross section a concave form partly circumscribing the packing side or sides.

2. An endless rubber packing according to claim 1, **characterized** in that the sleeve (6) at its outside edges comprises formed lips (7).

3. An endless rubber packing according to any of the preceding claims, **characterized** in that the packing is an O-ring packing.

## Patentansprüche

1. Endlose Gummi-Dichtung für Plattenwärmeaustauscher zum Einsetzen zwischen die Platten um deren Öffnungen, dadurch gekennzeichnet, daß eine Hülle (6) aus einem für die Wärmeaustauschermedien undurchdringbaren Metallmaterial mindestens entlang einer Seite der Dichtung quer zu der Dichtungsebene vorgesehen ist, wobei die Hülle im Querschnitt eine konkave Form besitzt, die teilweise die Seite oder Seiten der Dichtung begrenzt.

2. Endlose Gummi-Dichtung nach Anspruch 1, dadurch gekennzeichnet, daß die Hülle (6) an ihren Außenkanten geformte Lippen aufweist.

3. Endlose Gummi-Dichtung nach einem der vorangehenden Ansprüche, dadurch gekennzeichnet, daß die Dichtung ein O-Ring ist.

## Revendications

1. Garniture sans fin de caoutchouc destinée à des échangeurs de chaleur à plaques et à être placée entre des plaques de manière connue, autour des orifices, caractérisée en ce qu'un manchon (6) d'un matériau métallique qui ne peut pas être pénétré par les fluides présents dans l'échangeur de chaleur est disposé au moins le long d'un côté de la garniture (4), dans le plan de la garniture et a, en coupe, une forme concave entourant partiellement un côté ou les côtés de la garniture.

2. Garniture sans fin de caoutchouc selon la revendication 1, caractérisée en ce que le manchon (6) comporte des lèvres (7) formées à ses bords externes.

3. Garniture sans fin de caoutchouc selon l'une quelconque des revendications précédentes, caractérisée en ce que la garniture est sous forme d'un joint torique.
